# EUROPEAN PATENT APPLICATION

(11) **EP 4 776 405 A1**
(43) Date of publication of application: **15.07.2026**
(21) Application number: 23952662.7
(22) Date of filing: 21.09.2023
(51) Int. Cl.: H01M 50/242, H01M 50/258, H01M 50/249

(54) **BUFFER PAD, BATTERY CELL, BATTERY AND ELECTRICAL APPARATUS**

(71) Applicant: Contemporary Amperex Technology Co., Limited, Ningde, Fujian 352100 (CN)
(72) Inventor: LIN, Chenhui, Ningde, Fujian 352100 (CN); HE, Jianfu, Ningde, Fujian 352100 (CN); YE, Yonghuang, Ningde, Fujian 352100 (CN)
(74) Representative: Gong, Jinping
(86) International application number: PCT/CN2023/120505
(87) International publication number: WO 2025/060006

(57) **Abstract**

A buffer pad (200), a battery cell (100), a battery (1000), and an electric apparatus (2000) are provided. The buffer pad (200), used inside the battery cell (100), includes a plurality of buffer members (20), where the plurality of buffer members (20) are arranged along a first direction, and two adjacent buffer members (20) have different rebound rates under a same pressure.

## Description

### TECHNICAL FIELD

This application relates to the field of batteries, and specifically, to a buffer pad, a battery cell, a battery, and an electric apparatus.

### BACKGROUND

Energy saving and emission reduction are key to the sustainable development of the automotive industry, and electric vehicles have become an important part of the sustainable development of the automotive industry due to their advantages in energy saving and environmental protection. For electric vehicles, battery technology is an important factor concerning their development.

During cyclic operation of a battery, an electrode assembly repeatedly swells, and a swelling force acts on a housing, causing the housing to bulge and deform, affecting a service life of the battery.

### SUMMARY

In view of the above problems, this application provides a buffer pad, a battery cell, a battery, and an electric apparatus, to reduce a swelling force in use of a battery.

According to a first aspect, this application provides a buffer pad, used inside a battery cell, including a plurality of buffer members, where the plurality of buffer members are arranged along a first direction, and two adjacent buffer members have different rebound rates under a same pressure.

In the technical solution of the embodiments of this application, a plurality of buffer members with different rebound rates are provided, and the buffer pad may be both highly resilient and supportive, providing support throughout the entire charge-discharge use cycle of the battery cell, satisfying the usage requirements of the battery cell. Further, during swelling of the electrode assembly, the buffer pad may be compressed and deformed to reduce the swelling force acting on the housing, prolonging a service life of the battery cell.

In some embodiments, the buffer pad further includes a support plate, where a plurality of the buffer members are provided on a side portion of the support plate and connected to the support plate. In the above technical solution, since the support plate is provided, the plurality of buffer members can be provided on the support plate, facilitating mounting and fixation of the buffer members, facilitating the processing and manufacturing of the entire buffer pad; further, the structural stability of the entire buffer pad can be improved to provide effective support throughout the entire cycle of the battery cell.

In some embodiments, a plurality of the buffer members are adhered to the support plate. In the above technical solution, the plurality of buffer members may be directly adhered to the support plate to achieve the assembly of the buffer pad. The assembly process is simple, convenient for formation, simplifying the manufacturing of the entire buffer pad and lowering the manufacturing costs.

In some embodiments, a distance between two adjacent buffer members is L, and L is in a range of 0 mm to 5 mm. In the above technical solution, in this way, uneven local stress caused by an excessively large distance between two buffer members can be avoided, improving the support effect of the buffer pad.

In some embodiments, a thickness of the support plate is in a range of 30 µm to 200 µm. In the above technical solution, the problems that the excessively thick buffer pad leads to excessive space occupation by the buffer pad and difficulty in compression of the buffer pad can be avoided to a certain extent, and the support effect on the buffer members can be improved, improving the support capability of the buffer pad, thereby satisfying the requirements for deformation-resistance in vacuum baking; or in the cycle of the battery cell, the buffer pad can provide strong support, reducing electrode sheet deformation and the like.

In some embodiments, a compressibility of the support plate at 1 MPa is less than 5%. In the above technical solution, since the compressibility of the support plate is within 5%, the support plate can provide reliable support to the buffer members, thereby enhancing the support provided by the buffer pad.

In some embodiments, a material of the support plate includes at least one of polyethylene, polymethacrylate, polyethylene terephthalate, and polytetrafluoroethylene. In the above technical solution, by adopting the above materials, the support plate can provide reliable support for the buffer members, thereby enhancing the support by the buffer pad.

In some embodiments, a plurality of the buffer members are respectively provided on two opposite sides of the support plate, and the plurality of the buffer members are symmetrically arranged on the two sides of the support plate. In the above technical solution, by providing a plurality of symmetrically arranged buffer members on two sides of the support plate, the buffer pad is symmetrically arranged with respect to a center plane of the support plate, thereby preventing the buffer pad from moving and deforming in its length or width direction during swelling of the electrode assembly, improving the stability of the buffer pad, and further improving the reliability of the support of the buffer pad.

In some embodiments, a dimension of each of the buffer members in an arrangement direction of the plurality of the buffer members is B, and B is in a range of 5 mm to 20 mm. In the above technical solution, the assembly of the buffer pad is facilitated, and uneven local stress can be avoided to a certain extent, improving the support effect of the buffer pad.

In some embodiments, a dimension of the buffer member in a direction perpendicular to the arrangement direction of the plurality of the buffer members is H, and H is in a range of 0.5 mm to 10 mm. In the above technical solution, the energy density of the battery cell can be improved, and the buffer pad can be effectively compressed during swelling of the electrode assembly, thereby reducing a subsequent swelling force of the battery cell.

In some embodiments, two adjacent buffer members are connected to each other. In the above technical solution, through connection of the plurality of buffer members, the assembly of the entire buffer pad can be achieved, improving the stability of the buffer pad.

In some embodiments, two adjacent buffer members are adhered to each other. In the above technical solution, the plurality of buffer members are adhered to each other, and then the assembly of the entire buffer pad is achieved. The assembly is convenient, and the manufacturing cost can be reduced.

In some embodiments, the buffer pad includes a plurality of first buffer members and a plurality of second buffer members, each of the first buffer members and each of the second buffer members extend along a second direction, the plurality of the first buffer members and the plurality of the second buffer members are alternately arranged along the first direction, the first direction is perpendicular to the second direction, and under a same pressure, a rebound rate of the first buffer member is less than a rebound rate of the second buffer member. In the above technical solution, the first buffer members and the second buffer members with different rebound rates are provided, and the buffer pad may be both highly resilient and supportive, providing support throughout the entire use cycle of the battery cell, satisfying the usage requirements of the battery cell. Further, during swelling of the electrode assembly, the buffer pad may be compressed and deformed to reduce the swelling force acting on the housing, prolonging a service life of the battery cell. Only two types of buffer members are used, which can reduce the manufacturing cost of the buffer pad and facilitate the manufacturing and assembly of the buffer pad.

In some embodiments, an area of the first buffer member is S1, an area of the second buffer member is S2, and S1/(S 1+S2) is in a range of 30% to 70%. In the above technical solution, this can ensure that throughout the entire charge-discharge cycle of the battery cell, the buffer pad can provide effective support on the electrode assembly, reducing the probability of problems such as electrode sheet wrinkling and interface abnormality.

In some embodiments, after a first pressure is reciprocally applied, a rebound rate of the first buffer member is not greater than 50%, a rebound rate of the second buffer member is not less than 90%, and the first pressure is in a range of 0.8 MPa to 1.2 MPa. In the above technical solution, throughout the entire charge-discharge cycle of the battery cell, the buffer pad can provide effective support on the electrode assembly, reducing the probability of problems such as electrode sheet wrinkling and interface abnormality.

In some embodiments, a compressibility of the first buffer member under a first pressure is 70% to 90%, a compressibility of the second buffer member under the first pressure is 70% to 90%, and the first pressure is in a range of 0.8 MPa to 1.2 MPa. In the above technical solution, during swelling of the electrode assembly, the two buffer members may be roughly compressed to the same thickness, thereby ensuring uniform force distribution on the electrode assembly, further effectively reducing the swelling force on the housing, improving the reliability of the entire battery cell.

In some embodiments, a compressibility of the first buffer member under a second pressure is 5% to 20%, a compressibility of the first buffer member under the second pressure is not less than 30%, and the second pressure is less than the first pressure. In the above technical solution, in the early stage of cyclic use of the battery cell, the first buffer member can provide effective support for the electrode assembly, reducing electrode sheet deformation, alleviating the electrode sheet wrinkling caused by swelling, alleviating lithium or sodium precipitation during the cycle, and ensuring a normal interface of the battery cell.

In some embodiments, the buffer member is a porous material member. In the above technical solution, by adopting such porous material member, the manufacturing cost can be reduced while the compressibility of the buffer pad can be improved.

In some embodiments, a material of the first buffer member includes at least one of polyethylene and polypropylene, and a material of the second buffer member includes at least one of polyurethane, silicone rubber, and melamine. In the above technical solution, the above materials can ensure that the resilience of the first buffer member is greater than that of the second buffer member while the manufacturing cost is reduced.

According to a second aspect, this application provides a battery cell, including a housing, an electrode assembly, and the buffer pad provided according to the first aspect of this application, where the buffer pad and the electrode assembly are both provided inside the housing. In the above technical solution, the buffer pad can provide support throughout the entire use cycle of the battery cell, satisfying the usage requirements of the battery cell. Further, during swelling of the electrode assembly, the buffer pad may be compressed and deformed to reduce the swelling force acting on the housing, prolonging a service life of the battery cell.

In some embodiments, an arrangement direction of the plurality of buffer members is perpendicular to an arrangement direction of the buffer pad and the electrode assembly. In the above technical solution, the plurality of buffer members can all contact the electrode assembly, thereby providing effective support for the electrode assembly. During the swelling of the electrode assembly, the buffer pad may be compressed and deformed, effectively reducing the swelling force acting on the housing. Further, a space occupied by the buffer pad inside the battery cell can be reduced, improving an energy density of the battery cell.

In some embodiments, the buffer pad is provided between the housing and the electrode assembly. In the above technical solution, the buffer pad is provided between the housing and the electrode assembly, which falicitates mounting, and the stress on the housing during swelling of the electrode assembly can be reduced, effectively reducing the probability of deformation of the housing.

In some embodiments, the battery cell includes a plurality of electrode assemblies, and the buffer pad is provided between two adjacent electrode assemblies. In the above technical solution, the buffer pad is provided between the electrode assemblies, and the buffer pad can effectively absorb the swelling amount of the electrode assemblies, reducing the stress on the housing during swelling of the electrode assemblies.

In some embodiments, a group margin range of the battery cell is 96% to 105%. In the above technical solution, since the above buffer pad is provided, the group margin of the battery cell is between 96% to 105%, that is, in the thickness direction of the battery cell, the buffer pad and the electrode assembly can roughly fill the entire inner cavity of the housing, thereby ensuring to a certain extent that the buffer pad can effectively support the electrode assembly, reducing interface abnormality problems such as electrode sheet wrinkling caused by support failure of the buffer pad for the electrode assembly.

In some embodiments, a ratio of a thickness of the buffer pad to a thickness of the electrode assembly is in a range of 2% to 15%. In the above technical solution, the energy density of the battery cell can be improved, and the buffer pad can provide effective buffer, reducing the swelling force on the housing during swelling of the electrode assembly, effectively reducing the probability of deformation of the housing.

In some embodiments, the electrode assembly includes a plurality of wound electrode sheets, an outer peripheral surface of the electrode assembly includes a straight portion and a bent portion connected to an end portion of the straight portion, and at least one of the straight portion and the bent portion is provided opposite to the buffer pad; or the electrode assembly includes a plurality of positive electrode sheets and a plurality of negative electrode sheets stacked along a third direction, and the buffer pad is provided opposite to a surface of at least one side of the electrode assembly along the third direction. In the above technical solution, the buffer pad corresponds to a plurality of electrode sheets, thereby providing effective support for the electrode assembly, alleviating the electrode sheet wrinkling. In addition, since a swelling amount of a large surface is relatively larger during swelling of the electrode assembly, the buffer pad provided opposite to the large surface of the electrode assembly can absorb the swelling of the large surface as much as possible, reducing the stress during swelling of the electrode assembly.

According to a third aspect, this application provides a battery, including the battery cell in the above embodiments.

According to a fourth aspect, this application provides an electric apparatus, including the battery in the above embodiments, where the battery is configured to provide electric energy.

The above description is only an overview of the technical solutions of this application. In order to more clearly understand the technical means of this application and to implement them in accordance with the content of the specification, and in order to make the above and other objects, features, and advantages of this application more obvious and easier to understand, the specific implementations of this application are specifically illustrated below.

### BRIEF DESCRIPTION OF DRAWINGS

By reading the detailed description of the preferred embodiments below, various other advantages and benefits become clear to those of ordinary skill in the art. The drawings are only for the purpose of illustrating the preferred embodiments and are not considered to limit this application. Moreover, the same reference signs are used to denote the same components in all the drawings. In the drawings:
FIG. 1 is a schematic diagram of an electric apparatus in the related art;
FIG. 2 is a schematic diagram of a battery in the related art;
FIG. 3 is a schematic diagram of a battery cell in the related art;
FIG. 4 is a schematic diagram of a buffer pad in some embodiments of this application;
FIG. 5 is a side view of the embodiments shown in FIG. 4;
FIG. 6 is a schematic diagram of a buffer pad in other embodiments of this application;
FIG. 7 is a cross-sectional view of the embodiments shown in FIG. 6;
FIG. 8 is a schematic diagram of a buffer pad in still other embodiments of this application;
FIG. 9 is a schematic diagram of a buffer pad in yet other embodiments of this application;
FIG. 10 is an enlarged view of circle A shown in FIG. 9;
FIG. 11 is a schematic diagram of a buffer pad in other embodiments of this application;
FIG. 12 is a schematic diagram of rebound performance of a first buffer member in some embodiments of this application;
FIG. 13 is a schematic diagram of rebound performance of a second buffer member in some embodiments of this application;
FIG. 14 is a schematic diagram of a battery cell provided in some embodiments of this application;
FIG. 15 is a schematic diagram of a battery cell provided in other embodiments of this application;
FIG. 16 is a schematic diagram of a battery cell provided in still other embodiments of this application; and
FIG. 17 is a schematic diagram of an electrode assembly in some embodiments of this application.

Reference signs in the drawings:
battery 1000; electric apparatus 2000;
battery cell 100; housing 110; housing body 111; end cover 112; electrode assembly 120; positive electrode sheet 1201; negative electrode sheet 1202; straight portion 121; bent portion 122;
buffer pad 200;
support plate 10; buffer member 20; first buffer member 21; and second buffer member 22.

### DESCRIPTION OF EMBODIMENTS

To make the objectives, technical solutions, and advantages of the embodiments of this application clearer, the technical solutions in the embodiments of this application are clearly described below with reference to the drawings in the embodiments of this application. It is clear that the described embodiments are some but not all embodiments of this application. Based on the embodiments in this application, all other embodiments obtained by those of ordinary skill in the art without creative efforts belong to the protection scope of this application.

Unless otherwise defined, all technical and scientific terms used in this application have the same meanings as commonly understood by those of ordinary skill in the technical field of this application. The terms used in the specification of this application are only for the purpose of describing specific embodiments and are not intended to limit this application. The terms "include" and "have" and any variations thereof in the specification and claims of this application and the above description of the drawings are intended to cover non-exclusive inclusions. The terms "first", "second", and the like in the specification and claims of this application or the above drawings are used to distinguish different objects, not to describe a specific order or primary-secondary relationship.

"An embodiment" in this application means that a particular feature, structure, or characteristic described with reference to the embodiment can be included in at least one embodiment of this application. The appearance of the phrase at various positions in the specification does not necessarily refer to the same embodiment, nor is it an independent or alternative embodiment that is mutually exclusive with other embodiments.

In the description of this application, it should be noted that, unless otherwise clearly specified and limited, the terms such as "mount", "connect", "couple", and "attach" should be understood in a broad sense, for example, may refer to a fixed connection, a detachable connection, or an integral connection; or may be a direct connection or an indirect connection through an intermediary; or may be the communication inside two elements. For those of ordinary skill in the art, the specific meanings of the above terms in this application can be understood according to specific situations.

The term "and/or" in this application is only an association relationship describing associated objects, indicating that three relationships can exist, for example, A and/or B can indicate: A exists alone, A and B exist simultaneously, and B exists alone. In addition, the character "/" in this application generally indicates that associated objects before and after the character are in an "or" relationship.

In the embodiments of this application, the same reference signs indicate the same components, and for brevity, detailed descriptions of the same components in different embodiments are omitted. It should be understood that the thicknesses, lengths and widths of various components in the embodiments of this application shown in the drawings, as well as dimensions such as overall thickness, length and width of the integrated apparatus, are only exemplary illustrations and should not constitute any limitation on this application.

"Plurality" in this application refers to two or more (including two).

In this application, a battery refers to a single physical module that includes one or more battery cells to provide higher voltage and capacity. For example, the battery mentioned in this application may include a battery module, a battery pack, or the like. Some batteries may include a box for packaging one or more battery cells or a plurality of battery modules. The box may prevent liquids or other foreign objects from affecting the charge and discharge of the battery cells. Certainly, some batteries may not include the above box and are directly provided in a battery mounting compartment of the electric apparatus.

In this application, the battery cell may include a lithium-ion secondary battery, a lithium-ion primary battery, a lithium-sulfur battery, a sodium-lithium ion battery, a sodium-ion battery, a magnesium-ion battery, or the like, and this is not limited in the embodiments of this application. The battery cell may be cylindrical, flat, rectangular, or the like, and this is not limited in the embodiments of this application. Battery cells are generally categorized into three types based on packaging methods: cylindrical battery cell, prismatic battery cell, and pouch battery cell, and this is not limited in the embodiments of this application.

For example, the battery cell may include a housing, an electrode assembly, and an electrolyte, where the housing is configured to accommodate the electrode assembly and the electrolyte. The electrode assembly is formed by a positive electrode sheet, a negative electrode sheet, and a separator. Operation of the battery cell mainly depends on movement of metal ions between the positive electrode sheet and the negative electrode sheet. The positive electrode sheet includes a positive electrode current collector and a positive electrode active material layer. The positive electrode active material layer is applied to a surface of the positive electrode current collector. The positive electrode current collector not coated with the positive electrode active material layer protrudes from the positive electrode current collector coated with the positive electrode active material layer. The positive electrode current collector not coated with the positive electrode active material layer serves as a positive electrode tab. For example, in a lithium-ion battery, a material of a positive electrode current collector may be aluminum, and a positive electrode active material may be lithium cobaltate, lithium iron phosphate, ternary lithium, lithium manganate, or the like.

The negative electrode sheet includes a negative electrode current collector and a negative electrode active material layer. The negative electrode active material layer is applied to a surface of the negative electrode current collector. The negative electrode current collector not coated with the negative electrode active material layer protrudes from the negative electrode current collector coated with the negative electrode active material layer. The negative electrode current collector not coated with the negative electrode active material layer serves as a negative electrode tab. A material of the negative electrode current collector may be copper, and the negative electrode active material may be carbon, silicon, or the like. In order to avoid fusion during passage of a large current, multiple positive electrode tabs are stacked together, and multiple negative electrode tabs are stacked together.

A material of the separator may be PP (polypropylene, polypropylene), PE (polyethylene, polyethylene), or the like. In addition, the electrode assembly may be a wound structure or a stacked structure, and the embodiments of this application are not limited thereto.

A pole and the like may be provided on the battery cell and connected to the tab as an electrical connection portion of the battery cell. Moreover, the battery cell may be provided with a pressure relief portion. The pressure relief portion is configured to release internal substances of the battery cell (such as gas, liquid, and particle) when an internal pressure of the battery cell is excessively high (for example, thermal runaway), to reduce the internal pressure of the battery cell and avoid dangerous accidents such as explosion and combustion of the battery cell due to fast internal pressurization of the battery cell. For example, the pressure relief portion may be an explosion-proof valve, an explosion-proof sheet, or the like.

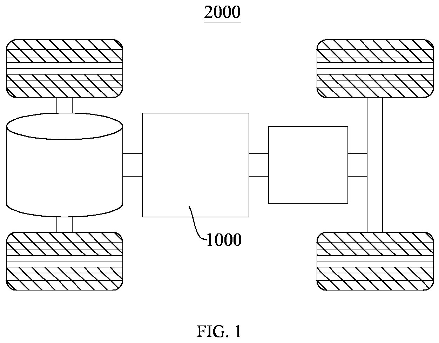

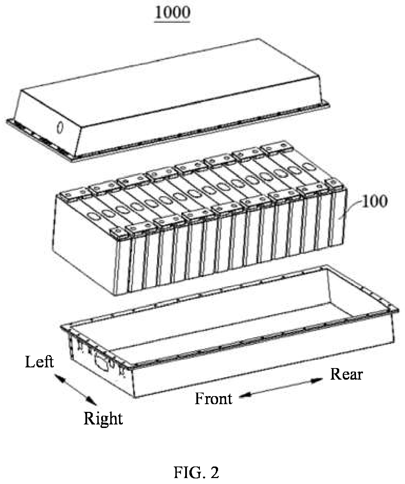

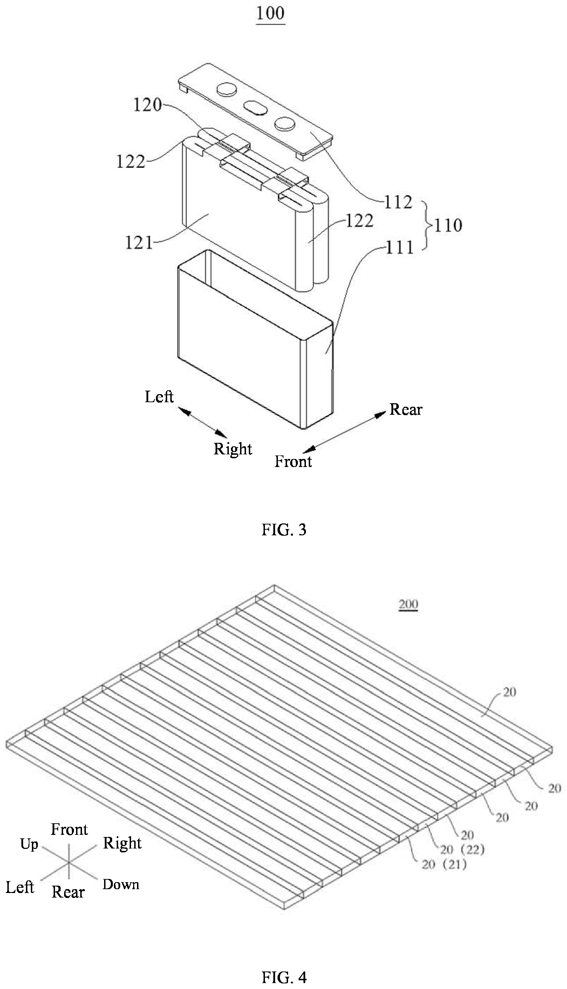

As shown in FIG. 1 and FIG. 2, in some electric apparatuses 2000, a battery 1000 is used for power supply, the battery 1000 includes a box and a battery cell 100, the box includes an upper shell and a lower shell. As shown in FIG. 3, the battery cell 100 includes a housing 110 and an electrode assembly 120. In the cyclic operation process of the battery cell 100, the electrode assembly 120 repeatedly swells, and a swelling force acts on the housing 110, causing the housing 110 to bulge and deform.

In the related art, in some designs, a buffer pad 200 is provided inside the housing 110, and reduce the swelling force on the housing 110 through compression of the buffer pad 200. However, to support the electrode assembly 120, the buffer pad 200 needs to provide certain support. During the cyclic use of the battery cell 100, especially in the later stage of the cycle, a swelling amount of the electrode assembly 120 is large, and the buffer pad 200 is greatly compressed to reduce a space occupied by the buffer pad 200, that is, the buffer pad 200 needs to have good resilience. That is, an ideal buffer pad 200 needs to be sufficiently resilient and supportive, but the two properties are often incompatible. A highly resilient buffer pad is more compressible, which compromises its ability to provide sufficient support, and therefore is ineffective in the early use stage of the battery cell 100. A highly supportive buffer pad often has poor resilience and is effective in the early use stage, but cannot rebound after being crushed in the later use stage and is ineffective.

In view of this, this application provides a buffer pad 200. The buffer pad 200 includes a plurality of buffer members 20, where the plurality of buffer members 20 are arranged along a first direction, and two adjacent buffer members 20 have different rebound rates under a same pressure.

In the buffer pad 200 of this structure, a plurality of buffer members 20 with different rebound rates are provided, and the buffer pad 200 may be both highly resilient and supportive, providing support throughout the entire use cycle of the battery cell 100, satisfying the usage requirements of the battery cell 100. Further, during swelling of the electrode assembly 120, the buffer pad 200 may be compressed and deformed to reduce the swelling force acting on the housing 110, prolonging a service life of the battery cell 100.

The buffer pad 200 disclosed in the embodiments of this application is applied to a battery cell, and the battery 1000 having the battery cell disclosed in the embodiments of this application can be applied to, but not limited to, electric apparatuses 2000 such as vehicles, ships, or aircraft; and the battery 1000 and the like disclosed in this application may form a power system of the electric apparatus 2000, to ensure the safety and reliability in use of the electric apparatus 2000.

For example, the electric apparatus 2000 disclosed in the embodiments of this application may be, but not limited to, vehicle, mobile phone, tablet, notebook computer, ship, spacecraft, electric toy, electric tool, or the like. The vehicle may be a fuel vehicle, a gas vehicle, a new energy vehicle, or a rail vehicle. The new energy vehicle may be a pure electric vehicle, a hybrid electric vehicle, or an extended-range vehicle, or the like. The spacecraft includes an airplane, a rocket, a space shuttle, a spaceship, or the like. The electric toy includes fixed or mobile electric toys, such as a game console, an electric vehicle toy, an electric ship toy, an electric airplane toy, or the like. The electric tool includes a metal cutting electric tool, a grinding electric tool, an assembly electric tool, a rail electric tool, such as an electric drill, an electric grinder, an electric wrench, an electric screwdriver, an electric hammer, an impact drill, a concrete vibrator, an electric planer, or the like.

Below, a buffer pad 200 according to embodiments of this application is described with reference to the accompanying drawings.

As shown in FIG. 4 to FIG. 13, the buffer pad 200 in the embodiments of this application is used inside a battery cell 100, and the battery cell 100 includes a housing 110 and an electrode assembly 120. The buffer pad 200 includes a plurality of buffer members 20, where the plurality of buffer members 20 are arranged along a first direction, and two adjacent buffer members 20 have different rebound rates under the same pressure.

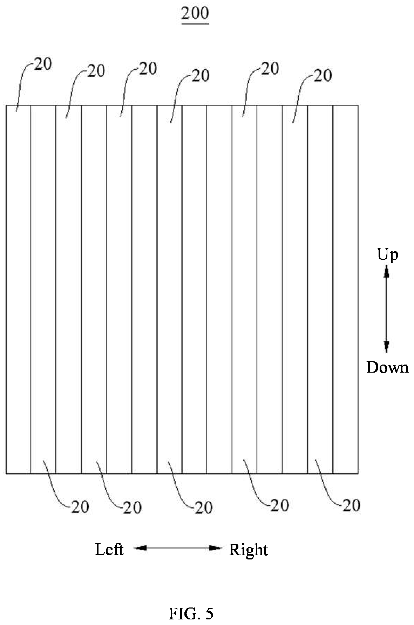

As shown in FIG. 4 and FIG. 5, the buffer pad 200 includes a plurality of buffer members 20. As shown in FIG. 4, the plurality of buffer members 20 are sequentially arranged along a left-right direction, and two adjacent buffer members 20 have different rebound rates. The plurality of buffer members 20 may alternatively be arranged in multiple rows and columns, for example, the buffer pad 200 includes a plurality of buffer members 20 arranged along a left-right direction and a plurality of buffer members 20 arranged along an up-down direction. In the left-right direction, two adjacent buffer members 20 have different rebound rates, and in the up-down direction, two adjacent buffer members 20 have different rebound rates. Alternatively, the buffer member 20 may be in a ring shape, with the plurality of buffer members 20 sequentially sleeved, that is, the plurality of buffer members 20 arranged along an inner-outer direction, and in this case, two adjacent buffer members 20 in the inner-outer direction have different rebound rates.

The rebound rate herein refers to a ratio of a thickness of the buffer member 20 to an initial free thickness of the buffer member 20 in a case that the buffer member 20 rebounds after a certain pressure is applied to the buffer member 20 and then removed. The rebound rates of two adjacent buffer members 20 under a same pressure are different, to be specific, rebound rates of two adjacent buffer members 20 are different after a force is applied on two adjacent buffer members 20 and then removed.

It can be understood that the rebound rates of two adjacent buffer members 20 are different, correspondingly, the support capabilities of the two adjacent buffer members 20 are also different, where a buffer member 20 with a high rebound rate has a low support capability, and a buffer member 20 with a low rebound rate has a high support capability.

Further, the plurality of buffer members 20 may be classified into two types, where one type of buffer member 20 has a rebound rate greater than that of the other type of buffer member 20, and the two types of buffer members 20 with different rebound rates are alternately arranged, that is, between two adjacent buffer members 20 with a same rebound rate, a buffer member 20 with the other rebound rate is provided. The plurality of buffer members 20 may alternatively be classified into more types, for example, the plurality of buffer members 20 are classified into three types, where the three types of buffer members 20 are alternately arranged, as long as rebound rates of two adjacent buffer members 20 are different.

The buffer pad 200 is formed by a plurality of buffer members 20 with different rebound rates, so that the buffer pad 200 can provide certain support and have certain resilience. When the buffer pad 200 is placed inside the battery cell 100, at least one of the plurality of buffer members 20 contacts one of the electrode assembly 120 and the housing 110, and in this case, a positioning the buffer pad 200 is fixed, and this side or another side of the buffer pad 200 contacts the electrode assembly 120. In addition, since the rebound rates of two adjacent buffer members 20 are different, in the early stage of cyclic use of the battery cell 100, the buffer member 20 with a lower rebound rate provides stronger support, and the buffer member 20 can support the electrode assembly 120; in the later stage of cyclic use of the battery cell 100, even if the buffer member 20 with a lower rebound rate can hardly return to an initial thickness and is spaced from the electrode assembly 120, the buffer member 20 with a higher rebound rate can always contact the electrode assembly 120. In this case, the buffer member 20 can effectively support the electrode assembly 120. Therefore, the buffer pad 200 can effectively support the electrode assembly 120 throughout the entire use cycle of battery, reducing electrode sheet deformation, alleviating electrode sheet wrinkling caused by swelling, mitigating lithium or sodium precipitation during the cycle, and ensuring a normal interface of the battery cell 100.

Further, during the cyclic use of the battery cell 100, through the compression deformation of the buffer pad 200, the swelling force of the swelling electrode assembly 120 acting on the housing 110 can be reduced, and in the later stage of the cycle, the buffer pad 200 can have a relatively large compression amount, reducing a space occupied by the buffer pad 200, ensuring a swelling space for the electrode assembly 120 to a certain extent, thereby reducing the swelling force of the battery cell 100.

In the buffer pad 200 of this structure, a plurality of buffer members 20 with different rebound rates are provided, and the buffer pad 200 may be both highly resilient and supportive, providing support throughout the entire use cycle of the battery cell 100, satisfying the usage requirements of the battery cell 100. Further, during swelling of the electrode assembly 120, the buffer pad 200 may be compressed and deformed to reduce the swelling force acting on the housing 110, prolonging a service life of the battery cell 100.

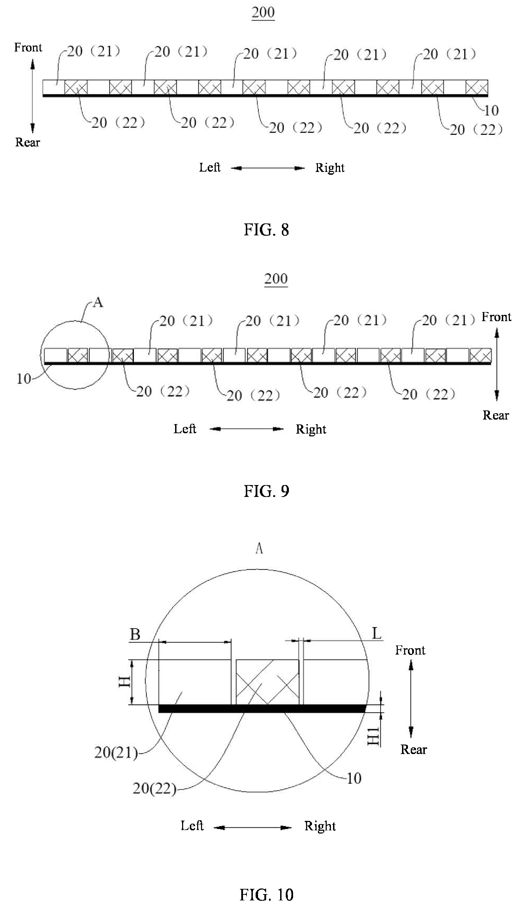

As shown in FIG. 8 to FIG. 11, in some embodiments, the buffer pad 200 further includes a support plate 10, where the plurality of buffer members 20 are provided on a side portion of the support plate 10 and connected to the support plate 10.

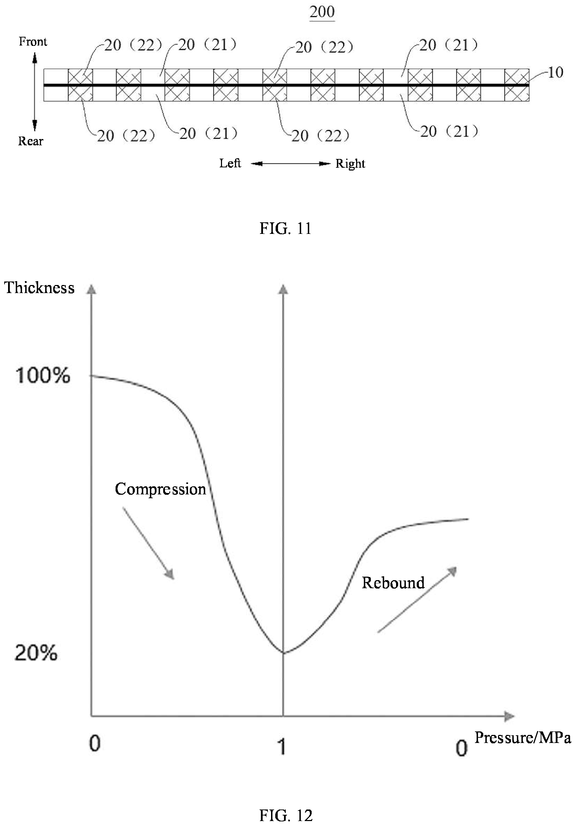

As shown in FIG. 8 to FIG. 11, the support plate 10 is an integral plate-like structure, and the buffer members 20 are provided on the support plate 10. As shown in FIG. 8 to FIG. 10, the plurality of buffer members 20 are provided on one side of the support plate 10. In this case, the buffer member 20 may contact the housing 110 or the electrode assembly 120, and the support plate 10 may also contact the housing 110 or the electrode assembly 120. As shown in FIG. 11, the plurality of buffer members 20 are respectively provided on two opposite sides of the support plate 10. In this case, the buffer members 20 on the two sides may contact the housing 110 or the electrode assembly 120.

It can be understood that initial thicknesses of the plurality of buffer members 20 may be the same. Herein, the thickness of the buffer member 20 refers to a dimension of the buffer member 20 in a direction perpendicular to a plane where the support plate 10 is located. Due to the different rebound performance of the plurality of buffer members 20, during the cyclic use of the battery cell 100, the thicknesses of the plurality of buffer members 20 change differently with the swelling of the electrode assembly 120. Since the buffer member 20 is provided on the support plate 10, the problem that the entire buffer pad 200 breaks due to a thickness change of the buffer member 20 can be avoided, improving structural stability of the buffer pad 200, further ensuring to a certain extent that the buffer pad 200 can provide effective support throughout the entire cycle of the battery cell 100.

In the above technical solution, since the support plate 10 is provided, the plurality of buffer members 20 can be provided on the support plate 10, facilitating mounting and fixation of the buffer members 20, facilitating the processing and manufacturing of the entire buffer pad 200; further, the structural stability of the entire buffer pad 200 can be improved to provide effective support throughout the entire cycle of the battery cell 100.

As shown in FIG. 8, in some embodiments, a plurality of buffer members 20 are adhered to the support plate 10.

In the above technical solution, the plurality of buffer members 20 may be directly adhered to the support plate 10 to achieve the assembly of the buffer pad 200. The assembly process is simple, convenient for formation, simplifying the manufacturing of the entire buffer pad 200 and lowering the manufacturing costs.

As shown in FIG. 10, in some embodiments, a distance between two adjacent buffer members 20 is L, and L is in a range of 0 mm to 5 mm.

As shown in FIG. 9 and FIG. 10, two adjacent buffer members 20 are spaced apart along a left-right direction. The buffer members 20 are spaced apart, so that a gap is formed on the buffer pad 200, thereby reducing an effective area of the buffer pad 200, improving a compressibility of the entire buffer pad 200 while ensuring certain support provided by the buffer pad 200.

In addition, a distance between two adjacent buffer members 20 is L. Certainly, if two adjacent buffer members 20 are spaced apart along an up-down direction, a distance between the two adjacent buffer members 20 is still defined as L. If L is excessively large, that is, the distance between two adjacent buffer members 20 is excessively large, local stress is uneven; further, this leads to an excessively small number of buffer members 20, and a small contact area between the buffer pad 200 and the electrode assembly 120 or the housing 110. In this case, effective support cannot be achieved. Therefore, L is limited to a range not greater than 5 mm, that is, L may be 5 mm, or any value less than 5 mm, such as 1 mm, 2 mm, 3 mm, 4 mm, or the like. In this way, uneven local stress caused by an excessively large distance between two buffer members 20 can be avoided, improving the support effect of the buffer pad 200.

As shown in FIG. 8, two adjacent buffer members 20 are sequentially arranged along the left-right direction, where the distance L between two adjacent buffer members 20 is 0. In this case, the plurality of buffer members 20 are sequentially attached, which can avoid to a certain extent the problem of uneven local stress, improving the support effect of the buffer pad 200.

As shown in FIG. 10, in some embodiments, a thickness of the support plate 10 is in a range of 30 µm to 200 µm.

As shown in FIG. 10, an excessively large thickness H1 of the support plate 10 easily leads to an excessively thick buffer pad 200, and the buffer pad 200 occupies excessive space, affecting an energy density of the battery cell 100; further, the excessively thick support plate 10 leads to an increase in hardness of the buffer pad 200, and then relatively great compression of the buffer pad 200 is difficult to achieve. An excessively small thickness of the support plate 10 easily leads to an excessively low support strength of the buffer pad 200 and poor fixation reliability of the buffer member 20. Therefore, the thickness of the support plate 10 may be limited to 30 µm to 200 µm, and the thickness of the support plate 10 may be 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm.

In this way, the problems that the excessively thick buffer pad 200 leads to excessive space occupation by the buffer pad 200 and difficulty in compression of the buffer pad 200 can be avoided to a certain extent, and the support effect on the buffer members 20 can be improved, improving the support capability of the buffer pad 200, thereby satisfying the requirements for deformation-resistance in vacuum baking; or in the cycle of the battery cell 100, the buffer pad 200 can provide strong support, reducing electrode sheet deformation and the like.

In some embodiments, a compressibility of the support plate 10 at 1 MPa is less than 5%.

The compressibility of the support plate 10 at 1 MPa is less than 5%, that is, the compressibility of the support plate 10 at 1 MPa is 5%, or less than 5%, such as 4%, 3%, 2%, or 1%, or may be 0.

In the above technical solution, since the compressibility of the support plate 10 is within 5%, the support plate 10 can provide reliable support to the buffer members 20, thereby enhancing the support provided by the buffer pad 200.

In some embodiments, a material of the support plate 10 includes at least one of polyethylene, polymethacrylate, polyethylene terephthalate, and polytetrafluoroethylene.

The support plate 10 may be high-density polyethylene, polymethacrylate, polyethylene terephthalate, polytetrafluoroethylene, or a composite material member, and may also be formed by compounding other materials. By adopting the above materials, the support plate 10 can provide reliable support for the buffer members 20, thereby enhancing the support by the buffer pad 200.

As shown in FIG. 11, in some embodiments, a plurality of buffer members 20 are provided on two opposite sides of the support plate 10, and the plurality of buffer members 20 are symmetrically arranged on two sides of the support plate 10.

As shown in FIG. 11, buffer members 20 are provided on front and rear sides of the support plate 10, and the buffer members 20 are positioned correspondingly in a front-rear direction. Specifically, the quantity of buffer members 20 on the front side of the support plate 10 is the same as that of buffer members 20 on the rear side of the support plate 10, and the buffer members 20 on the front side of the support plate 10 are in one-to-one correspondence with the buffer members 20 on the rear side of the support plate 10. A distance between two adjacent buffer members 20 on the front side of the support plate 10 is L1, and a distance between two adjacent buffer members 20 on the rear side of the support plate 10 is L2, where L1 is the same as L2.

In some examples, the front side of the support plate 10 has a first buffer member 21 and a second buffer member 22, the first buffer member 21 and the second buffer member 22 are alternately arranged along the left-right direction, the rear side of the support plate 10 has a first buffer member 21 and a second buffer member 22, and the first buffer member 21 and the second buffer member 22 are alternately arranged along the left-right direction, where the first buffer member 21 on the front side of the support plate 10 is opposite to the first buffer member 21 on the rear side of the support plate 10, and the second buffer member 22 on the front side of the support plate 10 is opposite to the second buffer member 22 on the rear side of the support plate 10. In this case, the entire buffer pad 200 is symmetric with respect to a center plane of the support plate 10.

In the above technical solution, by providing a plurality of symmetrically arranged buffer members 20 on two sides of the support plate 10, the buffer pad 200 is symmetrically arranged with respect to the center plane of the support plate 10, thereby preventing the buffer pad 200 from moving and deforming in its length or width direction during swelling of the electrode assembly 120, improving the stability of the buffer pad 200, and further improving the reliability of the support of the buffer pad 200.

As shown in FIG. 10, in some embodiments, a dimension of each of the buffer members 20 in an arrangement direction of the plurality of buffer members 20 is B, and B is in a range of 5 mm to 20 mm.

As shown in FIG. 10, the plurality of buffer members 20 are arranged along the left-right direction. In the left-right direction, an excessively large width dimension of the buffer member 20 leads to uneven local stress; an excessively small width dimension of the buffer member 20 leads to difficulty in manufacturing and formation of the buffer member 20, hindering assembly, and further leads to a large quantity of buffer members 20, increasing the workload of assembly of the buffer pad 200. Therefore, B is limited to a range of 5 mm to 20 mm, that is, B may be 5 mm, or 20 mm, or any value between 5 mm to 20 mm, for example, B is 6 mm, 7 mm, 8 mm, 9 mm, 10 mm, 11 mm, 12 mm, 13 mm, 14 mm, 15 mm, 16 mm, 17 mm, 18 mm, 19 mm, or the like. In this case, the assembly of the buffer pad 200 is facilitated, and uneven local stress can be avoided to a certain extent, improving the support effect of the buffer pad 200.

As shown in FIG. 10, in some embodiments, a dimension of the buffer member 20 in a direction perpendicular to the arrangement direction of the plurality of buffer members 20 is H, and H is in a range of 0.5 mm to 10 mm.

As shown in FIG. 10, in the front-rear direction, an excessively small thickness dimension H of the buffer member 20 (a thickness of the buffer member 20 in a free state) limits a compression deformation space of the buffer pad 200, and then during swelling of the electrode assembly 120, a compression amount of the buffer pad 200 is small, limiting the effect of buffering the swelling force on the housing 110; an excessively large thickness dimension H of the buffer member 20 leads to an excessive space occupation by the buffer member 20, leading to a decrease in the energy density inside the battery cell 100. In this case, H is limited to 0.5 mm to 10 mm, where H may be 0.5 mm, 10 mm, or any value between 0.5 mm to 10 mm, for example, H may be 1 mm, 2 mm, 3 mm, 4 mm, 5 mm, 6 mm, 7 mm, 8 mm, 9 mm, or the like. In this way, the energy density of the battery cell 100 can be improved, and the buffer pad 200 can be effectively compressed during swelling of the electrode assembly 120, thereby reducing a subsequent swelling force of the battery cell 100.

As shown in FIG. 5, in some embodiments, two adjacent buffer members 20 are connected to each other.

Through connection of two adjacent buffer members 20, the assembly of the entire buffer pad 200 can be achieved. The connection method herein includes adhesion, insertion, and the like, which improves the stability of the buffer pad 200.

It can be understood that the buffer pad 200 may be in a sheet shape, where the buffer pad 200 may be in a square sheet shape, a circular sheet shape, or a triangular sheet shape. The sheet structure facilitates the mounting of the buffer pad 200 inside the battery cell 100, and minimizes the space occupied by the buffer pad 200.

As shown in FIG. 5, in some embodiments, two adjacent buffer members 20 are adhered to each other.

The plurality of buffer members 20 are sequentially adhered to each other, and then the assembly of the entire buffer pad 200 is achieved. The assembly is convenient, and the manufacturing cost can be reduced.

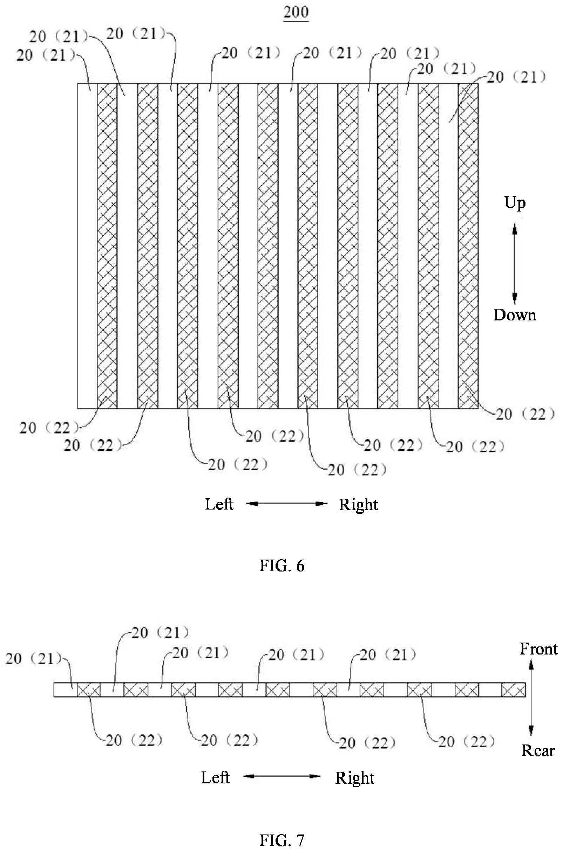

As shown in FIG. 6 to FIG. 13, in some embodiments, the buffer pad 200 includes a plurality of first buffer members 21 and a plurality of second buffer members 22, the plurality of first buffer members 21 and the plurality of second buffer members 22 are alternately arranged along the first direction, each first buffer member 21 and each second buffer member 22 respectively extend along a second direction, the first direction is perpendicular to the second direction, and under a same pressure, a rebound rate of the first buffer member 21 is less than a rebound rate of the second buffer member 22.

As shown in FIG. 6, FIG. 12, and FIG. 13, the first buffer member 21 and the second buffer member 22 respectively form strip-shaped buffer members 20, the first buffer member 21 and the second buffer member 22 are alternately arranged along the left-right direction, one second buffer member 22 is provided between two adjacent first buffer members 21, and one first buffer member 21 is provided between two adjacent second buffer members 22. In this way, the first buffer members 21 and the second buffer members 22 are evenly distributed. The rebound rate of the second buffer member 22 is greater than the rebound rate of the first buffer member 21, and the support provided by the first buffer member 21 is stronger than the support provided by the second buffer member 22.

In the early stage of cyclic use of the battery cell 100, the support by the first buffer member 21 is relatively strong, and the first buffer member 21 can effectively support the electrode assembly 120; in the later stage of cyclic use of the battery cell 100, even if the first buffer member 21 can hardly return to an initial thickness and is spaced from the electrode assembly 120, since the second buffer member 22 has a higher rebound rate, the second buffer member 22 can remain the contact with the electrode assembly 120. In this case, the second buffer member 22 can effectively support the electrode assembly 120. Thereby, the buffer pad 200 can effectively support the electrode assembly 120 throughout the entire use cycle of battery, reducing electrode sheet deformation, alleviating electrode sheet wrinkling caused by swelling, mitigating lithium or sodium precipitation during the cycle, and ensuring a normal interface of the battery cell 100.

Further, during the cyclic use of the battery cell 100, through the compression deformation of the buffer pad 200, the swelling force of the swelling electrode assembly 120 acting on the housing 110 can be alleviated, and in the later stage of the cycle, the buffer pad 200 can have a relatively large compression amount, reducing a space occupied by the buffer pad 200, ensuring a swelling space of the electrode assembly 120 to a certain extent, thereby reducing the swelling force of the battery cell 100.

In the buffer pad 200 of this structure, the first buffer members 21 and the second buffer members 22 with different rebound rates are provided, and the buffer pad 200 may be both highly resilient and supportive, providing support throughout the entire use cycle of the battery cell 100, satisfying the usage requirements of the battery cell 100. Further, during swelling of the electrode assembly 120, the buffer pad 200 may be compressed and deformed to reduce the swelling force acting on the housing 110, prolonging a service life of the battery cell 100. Only two types of buffer members 20 are used, which can reduce the manufacturing cost of the buffer pad 200 and facilitate the manufacturing and assembly of the buffer pad 200.

As shown in FIG. 6, in some embodiments, an area of the first buffer member 21 is S1, an area of the second buffer member 22 is S2, and S1/(S1+S2) is in a range of 30% to 70%.

The area herein refers to an area of a surface of the buffer member 20 for contact with the electrode assembly 120 or the housing 110, such as the surface shown in FIG. 6. Herein, a sum of S1 and S2 may be equal to a total area of the entire buffer pad 200, as shown in FIG. 6. Herein, the sum of S1 and S2 may alternatively be less than the total area of the entire buffer pad 200.

As shown in FIG. 6, if the area occupied by the first buffer member 21 is excessively small, in the early stage of the charge-discharge cycle of the battery cell 100, the support effect of the first buffer member 21 on the electrode assembly 120 is limited, and effective support cannot be provided, leading to electrode sheet wrinkling, interface abnormality of the battery cell 100, and the like. If the area occupied by the first buffer member 21 is excessively large, the area occupied by the second buffer member 22 is excessively small. In this case, in the later stage of the cyclic charge-discharge of the battery cell 100, the support effect of the second buffer member 22 on the electrode assembly 120 is limited, and effective support cannot be provided, which also leads to electrode sheet wrinkling and interface abnormality of the battery cell 100. In this case, the range of S1/(S1+S2) may be limited to 30% to 70%, that is, S1/(S1+S2) may be 30%, 70%, or any value between 30% to 70%, for example, S1/(S1+S2) may be 40%, 50%, 60%, or the like.

This can ensure that throughout the entire charge-discharge cycle of the battery cell 100, the buffer pad 200 can provide effective support on the electrode assembly 120, reducing the probability of problems such as electrode sheet wrinkling and interface abnormality.

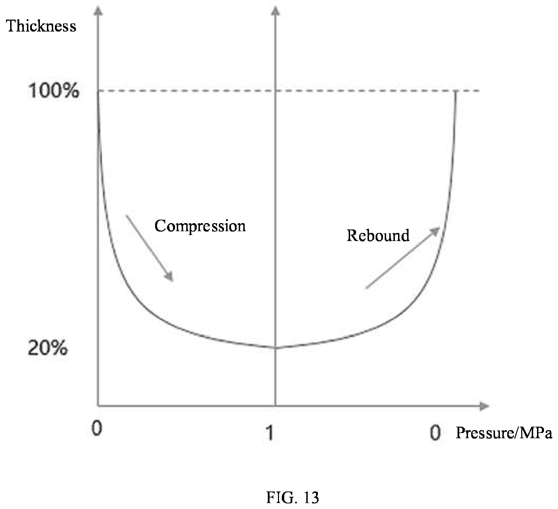

As shown in FIG. 12 and FIG. 13, in some embodiments, after a first pressure is reciprocally applied, the rebound rate of the first buffer member 21 is not greater than 50%, the rebound rate of the second buffer member 22 is not less than 90%, and the first pressure is in a range of 0.8 MPa to 1.2 MPa.

The first pressure herein may be roughly the same as the swelling force of the electrode assembly 120. By reciprocally applying the first pressure, a force bearing situation of the buffer pad 200 inside the battery cell 100 is simulated. The rebound rate of the first buffer member 21 is less than that of the second buffer member 22, so that the first buffer member 21 can provide support in the early stage of the charge-discharge cycle of the battery cell 100, and the second buffer member 22 can provide support in the later stage of the charge-discharge cycle of the battery cell 100, thereby ensuring that throughout the entire charge-discharge cycle of the battery cell 100, the buffer pad 200 can provide effective support on the electrode assembly 120, reducing the probability of problems such as electrode sheet wrinkling and interface abnormality.

For example, the first pressure may be 0.8 MPa, 0.9 MPa, 1.0 MPa, 1.1 MPa, or 1.2 MPa; further, the first pressure may be in a range of 0.8 MPa to 1.0 MPa. Herein, the first pressure may be repeatedly applied 30 times, 40 times, 50 times, 60 times, and the like.

It should be noted that, in the case that the pressure applied to the first buffer member 21 or the second buffer member 22 is less than the first pressure, the rebound rate of the first buffer member 21 and the rebound rate of the second buffer member 21 are greater than their rebound rates under the first pressure. For example, when the pressure applied to the first buffer member 21 or the second buffer member 22 is small, the first buffer member 21 and the second buffer member 22 can rebound to the initial state, that is, when the buffer pad 20 is provided inside the battery cell 100 and before the battery cell 100 is charged or discharged, the pressure applied to the buffer pad 20 is small, so the first buffer member 21 can restore to the initial free thickness after being taken out, and the second buffer member 22 can restore to the initial free thickness after being taken out.

As shown in FIG. 12 and FIG. 13, a compressibility of the first buffer member 21 under the first pressure is 70% to 90%, a compressibility of the second buffer member 22 under the first pressure is 70% to 90%, and the first pressure is in a range of 0.8 MPa to 1.2 MPa.

The compressibility of the buffer member 20 refers to a ratio of a thickness of the buffer member 20 reduced when the buffer member 20 is compressed to the thickness of the buffer member 20 in a free state. The compressibility of the buffer member 20 can be measured with a caliper. Specifically, the free thickness d1 of the buffer member 20 is an average of at least three repeated measurements; and the test buffer member 20 is placed between two parallel metal plates, a specific pressure is applied and hold for 1 min, and the thickness d2 of the buffer member 20 is an average of at least three repeated measurements with a caliper. The compressibility of the buffer member 20 is calculated as follows: compressibility of buffer member 20 (%) = (d2 - d1)/d1 × 100%.

As shown in FIG. 12 and FIG. 13, the two buffer members 20 have the same maximum compressibility under the first pressure, and therefore during swelling of the electrode assembly 120, the two buffer members 20 may be roughly compressed to the same thickness, thereby ensuring uniform force distribution on the electrode assembly 120, further effectively reducing the swelling force on the housing 110, improving the reliability of the entire battery cell 100.

For example, when the buffer pad 200 with a unit area receives the first pressure, the compressibility of the buffer pad 200 is 70% to 90%, where the first pressure is in a range of 0.8 MPa to 1.2 MPa, and the first pressure may be 0.8 MPa, 0.9 MPa, 1.0 MPa, 1.1 MPa, or 1.2 MPa; and the first pressure may be in a range of 0.8 MPa to 1.0 MPa.

The above first pressure may refer to the swelling force of the battery cell and a gas pressure inside the housing body of the battery.

In the above technical solution, under the first pressure, compression amounts of the two buffer members 20 may be between 70% to 90%, and the buffer member 20 in the buffer pad 200 may have a larger compression amount to reduce the space occupied by the buffer pad 200, to a certain extent ensuring the swelling space of the electrode assembly 120, thereby reducing the swelling force acting on the housing 110.

As shown in FIG. 12 and FIG. 13, in some embodiments, a compressibility of the first buffer member 21 under a second pressure is 5% to 20%, the compressibility of the first buffer member 21 under the second pressure is not less than 30%, and the second pressure is less than the first pressure.

The second pressure herein may be between 0.2 MPa to 0.7 MPa, for example, the second pressure is 0.2 MPa, 0.3 MPa, 0.4 MPa, 0.5 MPa, 0.6 MPa, or 0.7 MPa. Under a smaller pressure, the compressibility of the first buffer member 21 is smaller, and the compressibility of the second buffer member 22 is larger, that is, the first buffer member 21 has a better support capability than the second buffer member 22.

In this case, in the early stage of cyclic use of the battery cell 100, the first buffer member 21 can provide effective support for the electrode assembly 120, reducing electrode sheet deformation, alleviating the electrode sheet wrinkling caused by swelling, alleviating lithium or sodium precipitation during the cycle, and ensuring a normal interface of the battery cell 100.

In some embodiments, the buffer member 20 is a porous material member.

The porous material may be made through foaming. By adopting such porous material member, the manufacturing cost can be reduced while the compressibility of the buffer pad 200 can be improved.

In some embodiments, a material of the first buffer member 21 includes at least one of polyethylene and polypropylene, and a material of the second buffer member 22 includes at least one of polyurethane, silicone rubber, and melamine.

The first buffer member 21 may be polyethylene or polypropylene, or may be a composite material member, and the second buffer member 22 may be polyurethane, silicone rubber, melamine, or may be a composite material member. The above materials can ensure that the resilience of the first buffer member 21 is greater than that of the second buffer member 22 while the manufacturing cost is reduced.

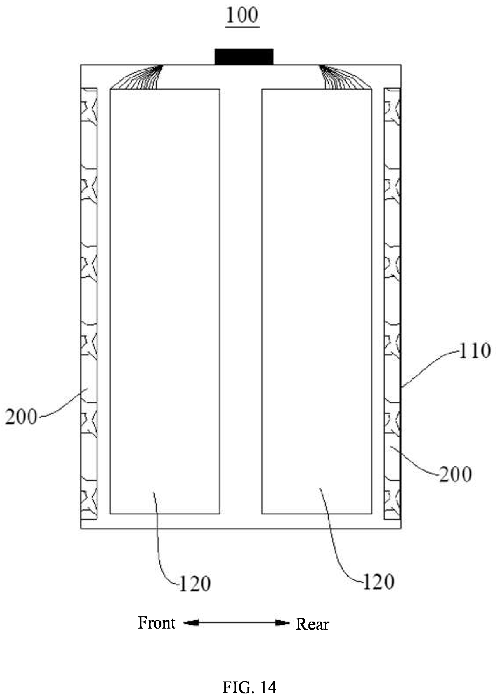

As shown in FIG. 14 to FIG. 16, according to a second aspect, this application provides a battery cell 100, including a housing 110, an electrode assembly 120, and a buffer pad 200, where the buffer pad 200 and the electrode assembly 120 are both provided inside the housing 110.

The housing 110 refers to an outermost structural member of the battery cell 100, and the housing 110 accommodates the electrode assembly 120, the electrolyte, and the like. The housing 110 herein may be an aluminum shell.

The electrode assembly 120 is provided inside the housing 110, and the electrode assembly 120 may be a stacked structure, that is, a plurality of electrode sheet layers of the electrode assembly 120 are stacked, and the electrode assembly 120 may alternatively be wound, that is, the positive electrode sheet and the negative electrode sheet of the electrode assembly 120 are stacked and then wound. In addition, one electrode assembly 120 may be provided inside the housing 110, or a plurality of electrode assemblies 120 may be provided.

The buffer pad 200 is the buffer pad 200 proposed in the first aspect of this application, and the buffer pad 200 is provided inside the housing 110, that is, the buffer pad 200 is located inside one battery cell 100. The buffer pad 200 may be located between the housing 110 and the electrode assembly 120, or between adjacent electrode assemblies 120.

The buffer pad 200 includes a plurality of buffer members 20, and rebound rates of the two adjacent buffer members 20 are different. The rebound rate of one buffer member 20 is lower than the rebound rate of the other buffer member 20, so a support capability of this buffer member 20 is better than a support capability of the other buffer member 20. Therefore, in the early stage of cyclic use of the battery cell 1000, the buffer member 20 with a lower rebound rate provides stronger support, and the buffer member 20 can support the electrode assembly; in the later stage of cyclic use of the battery cell 1000, even if the buffer member 20 with a lower rebound rate can hardly return to an initial thickness and is spaced from the electrode assembly, the buffer member 20 with a higher rebound rate can always contact the electrode assembly 120. In this case, the buffer member 20 can effectively support the electrode assembly 120. Therefore, the buffer pad 200 can effectively support the electrode assembly 120 throughout the entire use cycle of battery, reducing electrode sheet deformation, alleviating electrode sheet wrinkling caused by swelling, mitigating lithium or sodium precipitation during the cycle, and ensuring a normal interface of the battery cell 1000.

Further, during the cyclic use of the battery cell 1000, through the compression deformation of the buffer pad 200, the swelling force of the swelling electrode assembly acting on the housing can be reduced, and in the later stage of the cycle, the buffer pad 200 can have a relatively large compression amount, reducing a space occupied by the buffer pad 200, ensuring a swelling space for the electrode assembly to a certain extent, thereby reducing the swelling force of the battery cell 1000.

In the battery cell 1000 of this structure, the buffer pad 200 can provide support throughout the entire use cycle of the battery cell 1000, satisfying the usage requirements of the battery cell 1000. Further, during swelling of the electrode assembly, the buffer pad 200 may be compressed and deformed to reduce the swelling force acting on the housing, prolonging a service life of the battery cell 1000.

In some embodiments, an arrangement direction of the plurality of buffer members 20 is perpendicular to an arrangement direction of the buffer pad 200 and the electrode assembly 120.

As shown in FIG. 14 to FIG. 16, the buffer pad 200 is located on the front side or rear side of the electrode assembly 120, that is, the buffer pad 200 and the electrode assembly 120 are arranged along the front-rear direction, and the arrangement direction of the plurality of buffer members 20 may be arranged along the up-down direction or along the left-right direction, so that the plurality of buffer members 20 can all contact the electrode assembly 120, thereby providing effective support for the electrode assembly 120. During swelling of the electrode assembly, the buffer pad 200 may be compressed and deformed, effectively reducing the swelling force acting on the housing. Further, the space occupied by the buffer pad 200 inside the battery cell 100 can be reduced, improving the energy density of the battery cell 1000.

As shown in FIG. 14, in some embodiments, the buffer pad 200 is provided between the housing 110 and the electrode assembly 120.

Since the buffer pad 200 is provided between the housing 110 and the electrode assembly 120, effective support can be provided for the electrode assembly 120, satisfying the requirements for deformation-resistance in vacuum baking, and reducing electrode sheet deformation. In addition, during charge or discharge of the battery cell 100, as the electrode assembly 120 swells, the buffer pad 200 undergoes compression deformation, increasing the space inside the battery cell 100 to accommodate the electrode assembly 120, thereby reducing the stress caused by swelling of the electrode assembly 120, and effectively reducing the probability of deformation of the housing 110. In this way, the problem of large swelling force in the later stage of the cycle of the battery cell 100 can be alleviated and the service life of the battery cell 100 can be prolonged.

In the above technical solution, the buffer pad 200 is provided between the housing 110 and the electrode assembly 120, which facilitates mounting, and the stress on the housing 110 during swelling of the electrode assembly 120 can be reduced, effectively reducing the probability of deformation of the housing 110.

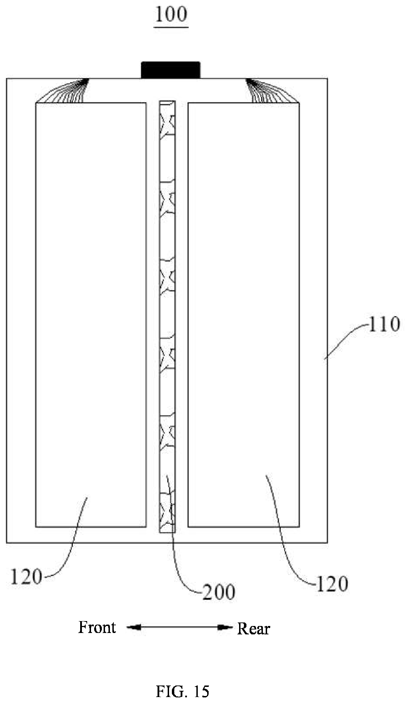

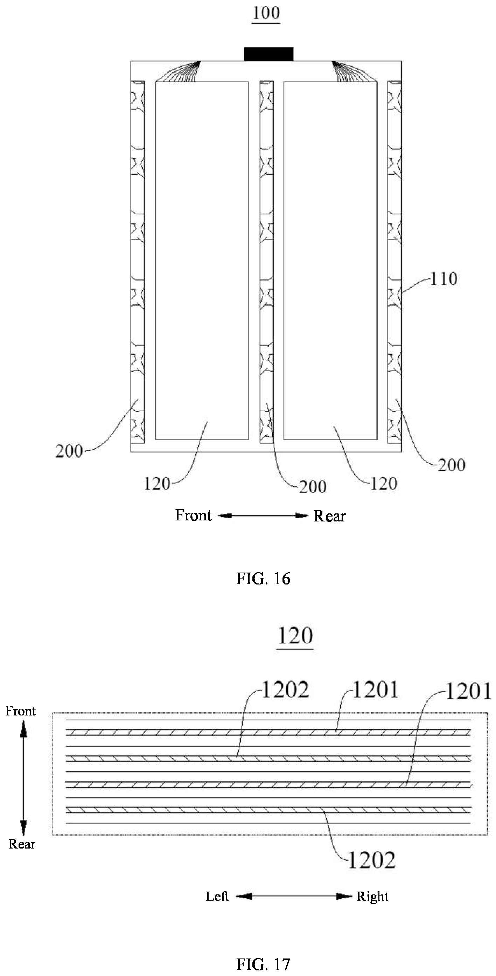

As shown in FIG. 15 and FIG. 16, in some embodiments, the battery cell 100 includes a plurality of electrode assemblies 120, and the buffer pad 200 is provided between two adjacent electrode assemblies 120.

As shown in FIG. 15 and FIG. 16, a buffer pad 200 is provided between adjacent electrode assemblies 120, for example, a buffer pad 200 may be provided between any two adjacent electrode assemblies 120, or a buffer pad 200 may be provided between some of adjacent electrode assemblies 120, so one or multiple buffer pads 200 may be provided.

In the above technical solution, the buffer pad 200 is provided between the electrode assemblies 120, and the buffer pad 200 can effectively absorb the swelling amount of the electrode assemblies 120, reducing the stress on the housing 110 during swelling of the electrode assemblies 120.

As shown in FIG. 16, a plurality of buffer pads 200 are provided inside the battery cell 100, at least one buffer pad 200 is provided between the housing 110 and the electrode assembly 120, and at least one buffer pad 200 is provided between two adjacent electrode assemblies 120. Therefore, the plurality of buffer pads 200 in different positions can effectively absorb the swelling amount of the electrode assemblies 120, reducing the stress on the housing 110 during swelling of the electrode assemblies 120.

In some embodiments, a group margin range of the battery cell 100 is 96% to 105%.

The housing 110 has two opposite inner wall surfaces, and the two inner wall surfaces are located on two sides of the arrangement direction of the buffer pad 200 and the electrode assembly 120, such as the inner wall surfaces in the front-rear direction shown in FIG. 14. The group margin of the battery cell 100 is a ratio of a sum of the thickness of the electrode assembly 120 and a total free thickness of the buffer pad 200 to a distance between two opposite inner wall surfaces of the housing 110. Herein, the thickness of the electrode assembly 120 is a thickness in a full-charge state. Since the above buffer pad 200 is provided, the group margin of the battery cell 100 is between 96% to 105%, that is, in the thickness direction of the battery cell 100, the buffer pad 200 and the electrode assembly 120 can roughly fill the entire inner cavity of the housing 110, thereby ensuring to a certain extent that the buffer pad 200 can effectively support the electrode assembly 120, reducing interface abnormality problems such as electrode sheet wrinkling caused by support failure of the buffer pad 200 for the electrode assembly 120.

Preferably, the group margin range of the battery cell 100 is 98% to 103%, thereby further enhancing the support provided by the buffer pad 200 for the electrode assembly 120, especially reducing the interface abnormality problems such as electrode sheet wrinkling caused by support failure of the buffer pad 200 for the electrode assembly 120 in the full-discharge state.

In some embodiments, a ratio of a thickness of the buffer pad 200 to a thickness of the electrode assembly 120 is in a range of 2% to 15%.

Herein, the thickness of the buffer pad 200 is the thickness of the buffer pad 200 in a free state, and the thickness of the electrode assembly 120 is the thickness of the electrode assembly 120 in a full-charge state. An excessively large thickness occupied by the buffer pad 200 easily affects the energy density of the battery cell 100. An excessively small thickness occupied by the buffer pad 200 hinders effective buffer, thereby leading to excessively large swelling force on the housing 110, especially an excessively large swelling force due to limited compression of the buffer pad 200 in the later stage of the cycle of the battery cell 100. In view of this, the ratio of the thickness of the buffer pad 200 to the thickness of the electrode assembly 120 is limited to 2% to 15%, and the ratio of the thickness of the buffer pad 200 to the thickness of the electrode assembly 120 may be 2%, 3%, 4%, 5%, 6%, 7%, 8%, 9%, 10%, 11%, 12%, 13%, 14%, or 15%. In this way, the energy density of the battery cell 100 can be improved, and the buffer pad 200 can provide effective buffer, reducing the swelling force on the housing 110 during swelling of the electrode assembly 120, effectively reducing the probability of deformation of the housing 110.

Preferably, the ratio of the thickness of the buffer pad 200 to the thickness of the electrode assembly 120 is 5% to 10%, that is, the ratio of the thickness of the buffer pad 200 to the thickness of the electrode assembly 120 may be 5%, 5.5%, 6.5%, 7.5%, 8.5%, 9.1%, 9.5%, 10%, or the like. In this way, the energy density of the battery cell 100 may be further improved, and the buffer pad 200 can provide effective buffer, reducing the swelling force on the housing 110 during the swelling of the electrode assembly 120, effectively reducing the probability of deformation of the housing 110.

In the embodiments of this application, the position of the buffer pad 200 is set relative to the electrode assembly 120 and may be flexibly set based on a structure of the electrode assembly 120.

As shown in FIG. 3 and FIG. 14 to FIG. 16, in some embodiments, the electrode assembly 120 includes a plurality of wound electrode sheets, an outer peripheral surface of the electrode assembly 120 includes a straight portion 121 and a bent portion 122 connected to an end portion of the straight portion 121, and at least one of the straight portion 121 and the bent portion 122 is provided opposite to the buffer pad.

A plurality of electrode sheets are wound, that is, the positive electrode sheet 1201 and the negative electrode sheet 1202 are stacked and then wound around a set axis, to form the electrode assembly 120. The straight portion 121 refers to a portion where the electrode sheet extends along a plane during winding; and the bent portion 122 refers to a portion where the electrode sheet extends along an arc surface during winding. For example, as shown in FIG. 3, a front side surface and a rear side surface of the electrode assembly 120 form the straight portion 121, and left and right end portions of the front side surface and the rear side surface are the bent portion 122, or the left side surface and the right side surface may be entirely form the bent portion 122.

The straight portion 121 is opposite to the buffer pad 200, so that the buffer pad 200 can buffer an area of the electrode assembly 120 corresponding to the straight portion 121; the bent portion 122 is provided opposite to the buffer pad 200, so that an area of the buffer pad 200 facing the bent portion 122 is generally in an arc shape, so that the buffer pad 200 can buffer the swelling force of the bent portion 122, reducing the risk of breakage and lithium precipitation of the electrode assembly 120.

Further, when the buffer pad 200 is located on one side of the straight portion 121 (such as the front side or rear side shown in FIG. 3), the arrangement direction of the plurality of buffer members 20 is perpendicular to the arrangement direction of the buffer pad 200 and the electrode assembly 120 (such as the front-rear direction shown in FIG. 3); when the buffer pad 200 is located on one side of the bent portion 122 (such as the left side or right side shown in FIG. 3), the arrangement direction of the plurality of buffer members 20 is perpendicular to the arrangement direction of the buffer pad 200 and the electrode assembly 120 (such as the left-right direction shown in FIG. 3). In this way, the plurality of buffer members 20 can all contact the electrode assembly 120, thereby providing effective support on the electrode assembly 120. During swelling of the electrode assembly, the buffer pad 200 can be compressed and deformed, effectively reducing the swelling force acting on the housing. In addition, the space occupied by the buffer pad 200 inside the battery cell 100 can be reduced, improving the energy density of the battery cell 1000.

As shown in FIG. 14 to FIG. 17, in some embodiments, the electrode assembly 120 includes a plurality of positive electrode sheets 1201 and a plurality of negative electrode sheets 1202 stacked along a third direction, and the buffer pad 200 is provided opposite to a surface of at least one side of the electrode assembly 120 along the third direction.

The third direction herein is the front-rear direction shown in FIG. 17. All positive electrode sheets 1201 and all negative electrode sheets 1201 of the electrode assembly 120 are stacked, and the positive electrode sheet 1201 and the negative electrode sheet 1202 both extend along a plane perpendicular to the third direction. The electrode assembly 120 of the above structure swells in the third direction during use, and therefore, the buffer pad 200 is provided opposite to a surface of at least one side of the electrode assembly 20 along the third direction, so that the buffer pad 200 can provide enhanced buffer and support to the electrode sheets, reducing electrode sheet wrinkling and the like. In this case, the buffer pad 200 provides effective buffer and support. In addition, an area required by the buffer pad 200 is small and the cost is low.

Further, the arrangement direction of the plurality of buffer members 20 is perpendicular to a stacking direction of the electrode assembly 120, that is, the first direction is perpendicular to the third direction, so that the plurality of buffer members 20 can all contact the electrode assembly 120, thereby providing effective support for the electrode assembly 120. During swelling of the electrode assembly 120, the buffer pad 200 can be compressed and deformed, effectively reducing the swelling force acting on the housing 110. In addition, the space occupied by the buffer pad 200 inside the battery cell 100 can be reduced, improving the energy density of the battery cell 1000.

In some embodiments, the buffer pad 200 corresponds to at least a surface with a largest area of the electrode assembly 120. As shown in FIG. 3 and FIG. 14 to FIG. 16, some electrode assemblies 120 have two end surfaces and four side surfaces, where the areas of two opposite side surfaces are relatively larger, namely, the large surfaces of the electrode assembly 120; and the areas of the other two opposite side surfaces are relatively smaller, namely, the small surfaces of the electrode assembly 120. The buffer pad 200 corresponds to the large surfaces; or both the large surfaces and the small surfaces are provided with corresponding buffer pads 200; or one end surface and the large surfaces are provided with corresponding buffer pads 200; or both end surfaces and the large surfaces are provided with corresponding buffer pads 200. The buffer pad 200 corresponds to the large surface, thereby providing effective support for the electrode assembly 120, reducing the electrode sheet wrinkling. In addition, since a swelling amount of the large surface is relatively larger during swelling of the electrode assembly 120, the buffer pad 200 provided opposite to the large surface of the electrode assembly 120 can absorb the swelling of the large surface as much as possible, reducing the stress during swelling of the electrode assembly 120.

In addition, the buffer pad 200 can be continuously provided and provided between any adjacent electrode assemblies 120 by folding or winding.

The battery 1000 according to an embodiment in a third aspect of this application includes the battery cell 100 according to the above embodiment in the second aspect of this application.

An electric apparatus 2000 according to an embodiment in a fourth aspect of this application includes the battery 1000 according to the above embodiment in a third aspect of this application, and the battery 1000 is configured to provide electric energy for the electric apparatus 2000. In this case, using the above battery 1000 helps improve the safety and reliability in use of the electric apparatus 2000.

Optionally, as shown in FIG. 1, when the battery 1000 is used for a vehicle, the battery 1000 may be provided at a bottom, head, or tail of the vehicle. The battery 1000 may be used for power supply of the vehicle, for example, the battery 1000 may serve as an operation power source of the vehicle. The vehicle may further include a controller and a motor, where the controller is used to control the battery 1000 to supply power to the motor, for example, satisfying the power demand of the vehicle during startup, navigation, and driving.

Below, a battery 1000 and a vehicle having the same according to a specific embodiment of this application are described with reference to the accompanying drawings.

As shown in FIG. 1, the battery 1000 is provided at the bottom of the vehicle, and as shown in FIG. 9, FIG. 10, and FIG. 14, the battery 1000 includes a plurality of battery cells 100, where each battery cell 100 includes a housing 110, an electrode assembly 120, and a buffer pad 200; the housing 110 includes a housing body 111 and an end cover 112; and the electrode assembly 120 and the buffer pad 200 are provided inside the housing 110.

The buffer pad 200 includes a support plate 10, a first buffer member 21, and a second buffer member 22. The first buffer member 21 and the second buffer member 22 are adhered to one side surface of the support plate 10. The first buffer member 21 and the second buffer member 22 are alternately arranged along a left-right direction. Adjacent first buffer member 21 and second buffer member 22 are spaced apart, where a distance L between adjacent first buffer member 21 and second buffer member 22 is 1.5 mm. In the left-right direction, a width of the first buffer member 21 is B1, and a width of the second buffer member 22 is B2. In a front-rear direction, a thickness of the first buffer member 21 is H11, and a thickness of the second buffer member 22 is H12, where the thickness herein is an initial free thickness, and H11 and H12 are the same. A total area of the first buffer member 21 is S1, a total area of the second buffer member 22 is S2, and S1 is the same as S2.

The first buffer member 21 is highly supportive, with a compression amount of 5% to 20% at 0.2 MPa, a compression amount of 70% to 90% at 1 MPa pressure, and a rebound rate of less than 50% after 50 times of 1 MP reciprocating compression. The second buffer member 22 is highly resilient, with a compression amount greater than 30% at 0.2 MPa, compression of 70% to 90% at 1 MPa, and a rebound rate greater than 90% after 50 times of 1 MP reciprocating compression.

Finally, it should be noted that: the above embodiments are only used to illustrate the technical solutions of this application, and not to limit them; although this application has been described in detail with reference to the foregoing embodiments, those of ordinary skill in the art should understand that modifications can still be made to the technical solutions recorded in the foregoing embodiments, or equivalent replacements can be made to some or all of the technical features therein; these modifications or replacements do not make the essence of the corresponding technical solutions depart from the scope of the technical solutions of the embodiments of this application, and they should all be covered within the scope of the claims and specification of this application. In particular, as long as there is no structural conflict, the various technical features mentioned in the various embodiments can be combined in any manner. This application is not limited to the specific embodiments disclosed in the text, but includes all technical solutions falling within the scope of the claims.

## Claims

1. A buffer pad, used inside a battery cell, comprising a plurality of buffer members, wherein the plurality of buffer members are arranged along a first direction, and two adjacent buffer members have different rebound rates under a same pressure.

2. The buffer pad according to claim 1, wherein the buffer pad further comprises a support plate, wherein a plurality of the buffer members are provided on a side portion of the support plate and connected to the support plate.

3. The buffer pad according to claim 2, wherein a plurality of the buffer members are adhered to the support plate.

4. The buffer pad according to claim 2, wherein a distance between two adjacent buffer members is L, and L is in a range of 0 mm to 5 mm.

5. The buffer pad according to claim 2, wherein a thickness of the support plate is in a range of 30 µm to 200 µm.

6. The buffer pad according to claim 2, wherein a compressibility of the support plate at 1 MPa is less than 5%.

7. The buffer pad according to claim 6, wherein a material of the support plate comprises at least one of polyethylene, polymethacrylate, polyethylene terephthalate, and polytetrafluoroethylene.

8. The buffer pad according to claim 2, wherein a plurality of the buffer members are respectively provided on two opposite sides of the support plate, and the plurality of the buffer members are symmetrically arranged on the two sides of the support plate.

9. The buffer pad according to any one of claims 1 to 8, wherein a dimension of each of the buffer members in an arrangement direction of the plurality of the buffer members is B, and B is in a range of 5 mm to 20 mm.

10. The buffer pad according to any one of claims 1 to 9, wherein a dimension of the buffer member in a direction perpendicular to the arrangement direction of the plurality of the buffer members is H, and H is in a range of 0.5 mm to 10 mm.

11. The buffer pad according to any one of claims 1 to 10, wherein two adjacent buffer members are connected to each other.

12. The buffer pad according to claim 11, wherein two adjacent buffer members are adhered to each other.

13. The buffer pad according to any one of claims 1 to 12, wherein the buffer pad comprises a plurality of first buffer members and a plurality of second buffer members, the plurality of the first buffer members and the plurality of the second buffer members are alternately arranged along the first direction, each of the first buffer members and each of the second buffer members extend along a second direction, the first direction is perpendicular to the second direction, and under a same pressure, a rebound rate of the first buffer member is less than a rebound rate of the second buffer member.

14. The buffer pad according to claim 13, wherein an area of the first buffer member is S1, an area of the second buffer member is S2, and S1/(S1+s2) is in a range of 30% to 70%.

15. The buffer pad according to claim 13, wherein after a first pressure is reciprocally applied, a rebound rate of the first buffer member is not greater than 50%, a rebound rate of the second buffer member is not less than 90%, and the first pressure is in a range of 0.8 MPa to 1.2 MPa.

16. The buffer pad according to claim 13, wherein a compressibility of the first buffer member under a first pressure is 70% to 90%, a compressibility of the second buffer member under the first pressure is 70% to 90%, and the first pressure is in a range of 0.8 MPa to 1.2 MPa.

17. The buffer pad according to claim 15, wherein a compressibility of the first buffer member under a second pressure is 5% to 20%, a compressibility of the first buffer member under the second pressure is not less than 30%, and the second pressure is less than the first pressure.

18. The buffer pad according to claim 13, wherein the buffer member is a porous material member.

19. The buffer pad according to claim 18, wherein a material of the first buffer member comprises at least one of polyethylene and polypropylene, and a material of the second buffer member comprises at least one of polyurethane, silicone rubber, and melamine.

20. A battery cell, comprising a housing, an electrode assembly, and the buffer pad according to any one of claims 1 to 19, and the buffer pad and the electrode assembly are both provided inside the housing.

21. The battery cell according to claim 20, wherein an arrangement direction of the plurality of buffer members is perpendicular to an arrangement direction of the buffer pad and the electrode assembly.

22. The battery cell according to claim 20 or 21, wherein the buffer pad is provided between the housing and the electrode assembly.

23. The battery cell according to any one of claims 20 to 22, wherein the battery cell comprises a plurality of electrode assemblies, and the buffer pad is provided between two adjacent electrode assemblies.

24. The battery cell according to any one of claims 20 to 23, wherein a group margin range of the battery cell is 96% to 105%.

25. The battery cell according to any one of claims 20 to 24, wherein a ratio of a thickness of the buffer pad to a thickness of the electrode assembly is in a range of 2% to 15%.

26. The battery cell according to any one of claims 20 to 25, wherein
the electrode assembly comprises a plurality of wound electrode sheets, an outer peripheral surface of the electrode assembly comprises a straight portion and a bent portion connected to an end portion of the straight portion, and at least one of the straight portion and the bent portion is provided opposite to the buffer pad; or
the electrode assembly comprises a plurality of positive electrode sheets and a plurality of negative electrode sheets stacked along a third direction, and the buffer pad is provided opposite to a surface of at least one side of the electrode assembly along the third direction.

27. A battery, comprising the battery cell according to any one of claims 20 to 26.

28. An electric apparatus, comprising the battery according to claim 27, wherein the battery is configured to provide electric energy.
